# FASCICULE DE BREVET EUROPEEN

(11) **EP 3 208 429 B1**
(45) Date de publication et mention de la délivrance du brevet: **11.04.2018**
(21) Numéro de dépôt: 17154682.3
(22) Date de dépôt: 03.02.2017
(51) Int. Cl.: F01D 19/02, F02C 7/26, F02C 9/28

(54) **SYSTÈME ET PROCÉDÉ DE DÉMARRAGE DES MOTEURS D'UN AÉRONEF BIMOTEUR**
SYSTEM UND VERFAHREN ZUM STARTEN EINES ZWEIMOTORIGEN LUFTFAHRZEUGS
SYSTEM AND METHOD FOR STARTING A TWIN MOTOR AIRCRAFT

(30) Priorité: 16.02.2016 FR 1651238
(43) Date de publication de la demande: 23.08.2017
(73) Titulaire: Airbus Operations S.A.S., 31060 Toulouse (FR); Airbus (S.A.S.), 31700 Blagnac (FR)
(72) Inventeur: BROUSSE, Pierre-Henri, 31520 RAMONVILLE (FR); LOZACH, Damien, 31770 COLOMIERS (FR); MANNEVILLE, Alexis, 31500 TOULOUSE (FR); MOLLIET, Christine, 31400 TOULOUSE (FR); ROUX, Paul-Emile, 31300 TOULOUSE (FR); ZACCARIA, Patrick, 82170 GRISOLLES (FR)
(74) Mandataire: Gicquel, Olivier Yves Gérard

(56) Documents cités:
- EP-A2- 1 258 618
- US-A1- 2014 373 553

## Description

La présente invention concerne un système et un procédé de démarrage des moteurs d'un aéronef bimoteur.

Entre deux vols d'un aéronef, le temps qui s'écoule entre le débarquement et l'embarquement est compris entre trente minutes et une heure. Durant ce temps, les moteurs de l'avion qui sont mis à l'arrêt restent chauds et n'ont pas le temps de refroidir complètement avant le redécollage et par conséquent, un gradient thermique résiduel au niveau des rotors des moteurs provoque la dilatation de l'arbre du rotor (phénomène dit de « bowed rotor »). Lors du redémarrage, si le moteur n'a pas eu le temps de refroidir suffisamment, certaines extrémités d'aubes des rotors peuvent frotter sur le carter.

Il est connu, pour empêcher ce phénomène, de procéder, lors du démarrage d'un moteur, à une mise en rotation progressive d'un rotor de l'étage haute pression du moteur (rotor N2) avec un palier durant lequel le régime de rotation dudit rotor est limité, par exemple à environ 10%, d'un régime de rotation nominal (ce seuil dépend du type de moteur).

Le document US2014/373553 décrit la mise en oeuvre d'un tel pallier lors du démarrage d'un moteur en maintenant de la vitesse de rotation du rotor de l'étage haute pression du moteur du moteur constante et inférieure à une vitesse critique pendant une phase du cycle de démarrage située avant l'injection de carburant. Selon ce document, la vitesse du rotor de l'étage haute pression du moteur est maintenue constante via une variation de l'angle d'ouverture de la vanne d'entrée d'air de la source de génération d'air comprimé de l'aéronef.

Le palier a pour but d'uniformiser la température du rotor et peut durer jusqu'à 5 minutes. Par conséquent, lorsque les deux moteurs sont démarrés successivement comme les réglementations l'exigent, il faut compter un temps minimum de 10 minutes après l'embarquement des passagers avant que les deux moteurs ne soient pleinement opérationnels pour le décollage.

Il existe un besoin d'optimiser le temps de démarrage des moteurs d'un aéronef bimoteur afin de limiter la durée d'immobilisation de l'aéronef au sol, tout en limitant le phénomène de « bowed rotor ».

A cet effet, l'invention concerne un procédé de démarrage automatique d'un aéronef bimoteur tel que revendiqué à la revendication 1 de la présente demande, ainsi qu'un système de démarrage des moteurs d'un aéronef bimoteur tel que revendiqué à la revendication 3 de la présente demande.

D'autres avantages et caractéristiques de l'invention apparaîtront dans la description détaillée non limitative ci-dessous. Cette description sera faite au regard des dessins annexés parmi lesquels :
Les figures 1a et 1b, sont des graphiques représentant le régime de rotation en fonction du temps d'un rotor d'un étage haute pression d'un premier moteur d'aéronef (Fig.1a) et d'un second moteur (Fig.1b) d'aéronef démarrés successivement en mettant en oeuvre un procédé de démarrage selon l'invention ; et
La figure 2 est une vue schématique d'un système de démarrage embarqué dans un aéronef bimoteur pour mettre en oeuvre le procédé de démarrage des moteurs selon l'invention.

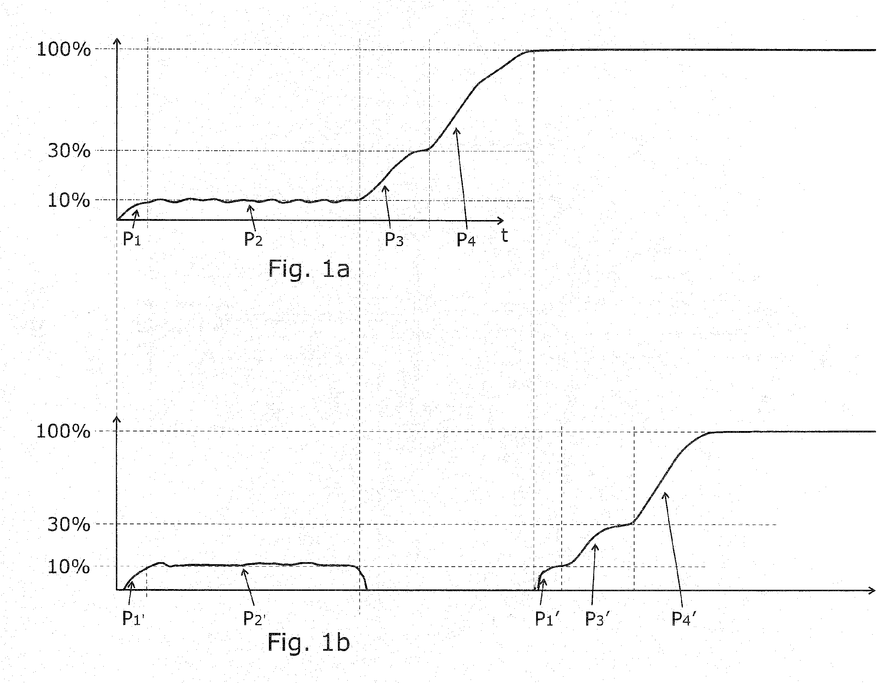

En référence avec les figures 1a et 1b, l'invention consiste en un procédé de démarrage automatique des moteurs 2,3 d'un aéronef bimoteur 1.

Par le terme « démarrage automatique », on entend la mise en rotation d'au moins un rotor de l'étage haute pression d'un moteur suivant un cycle de démarrage en quatre phases successives (voir figure 1a), avec :
- une première phase (P1), dite de démarrage, durant laquelle le rotor de l'étage haute pression (N2) du moteur est mis en rotation via notamment une injection d'air comprimé externe ;
- une seconde phase (P2) dite de palier durant laquelle la vitesse de rotation du rotor est maintenue sensiblement constante et égale, par exemple, à sensiblement 10% d'une valeur nominale. Cette phase dure jusqu'à ce que les données de capteurs (vibration, température) installés sur le moteur indiquent qu'il n'y a plus de gradient thermique résiduel au niveau du rotor du moteur. Lorsque les capteurs sont des capteurs de vibrations informant de la présence de vibrations du moteur lorsque le rotor est mis en rotation, l'absence de vibrations relevée par les capteurs indique la disparition du gradient thermique résiduel au niveau du rotor du moteur;
- une troisième phase (P3), dite d'allumage, durant laquelle la vitesse de rotation du rotor est augmentée, par exemple jusqu'à une valeur d'environ 30% de la valeur nominale. Aux alentours de la valeur de 30%, du kérosène est injecté dans le moteur puis le mélange air-kérosène est enflammé pour générer une combustion du mélange et entraîner le fonctionnement autonome du moteur par dilatation des gaz de combustion ; et
- une quatrième phase (P4), dite de montée en régime, durant laquelle l'injection d'air comprimé est arrêtée et la vitesse de rotation du rotor augmente jusqu'à atteindre la valeur nominale.

Lorsque le cycle de démarrage des deux moteurs 2,3 est terminé, le rotor de l'étage haute-pression (N2) du premier moteur et le rotor de l'étage haute-pression (N2) du second moteur tournent à la même vitesse (i.e. vitesse nominale).

Lorsqu'un premier moteur 2 est en mis en procédure de démarrage automatique par les pilotes de l'aéronef, ce dernier suit le cycle de démarrage classique en quatre phases (P1-P4) telles que décrit ci-dessus. Selon l'invention, le rotor de l'étage haute pression du second moteur 3 est mis en rotation (i.e. : phases de démarrage P1' et de palier P2' appliquées au second moteur) pendant une durée prédéterminée et à une vitesse sensiblement constante et inférieure à la valeur nominale durant le cycle de démarrage du premier moteur 1.

Une fois que le cycle de démarrage du premier moteur 2 est terminé, le second moteur 3 est mis en procédure de démarrage automatique par les pilotes de l'aéronef. Le cycle de démarrage du second moteur, dit cycle de démarrage modifié, comprend trois phases, à savoir la phase de démarrage (P1'), d'allumage (P3') et de montée en régime (P4') telles que décrites ci-dessus. Le cycle de démarrage modifié du second moteur ne comporte donc pas de phase de palier puisque cette dernière a été effectuée pendant le cycle de démarrage du premier moteur. Dans la suite de la description, le cycle de démarrage modifié sera appelé « cycle de démarrage court » tandis que le cycle de démarrage comprenant quatre phases sera appelé « cycle de démarrage normal ».

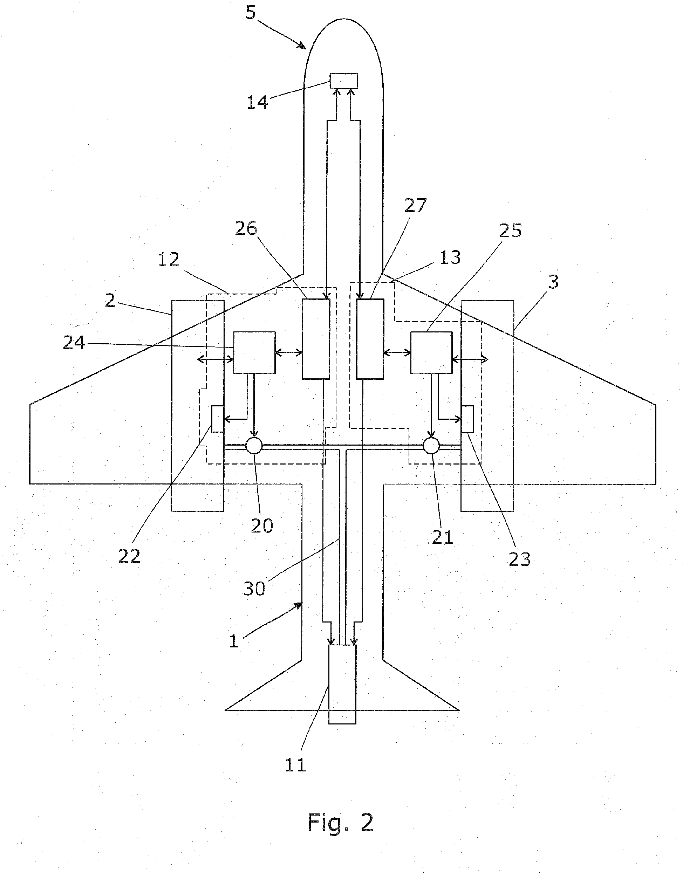

En référence avec la figure 2, la logique selon l'invention est implémentée par un système de démarrage des moteurs de l'aéronef 1. Ce système, comprend classiquement une source de génération d'air comprimé 11, par exemple l'APU (pour « auxilliary power unit » : unité de puissance auxilliaire), un premier et un second système moteurs 12,13 respectivement dédiés au fonctionnement du premier 2, et du second moteur 3, et une interface homme-machine 14 installée dans le poste de pilotage 5 de l'aéronef et permettant aux pilotes de déclencher le démarrage des moteurs.

Un système moteur 12,13 comprend une unité pneumatique 20,21 composée notamment d'une ou plusieurs vannes permettant de réguler un débit d'air, un système de démarrage 22,23 composé d'injecteurs de kérosène et d'allumeurs de type bougies, une unité de contrôle du moteur 24,25 (FADEC) contrôlant le moteur et les éléments (unité pneumatique et système de démarrage) nécessaires à la mise en oeuvre de son cycle de démarrage en fonction de données issues de capteurs (non représentés) installés sur le moteur, et une unité d'interface 26,27 (EIU pour « engine interface unit ») permettant la communication du système moteur avec les autres systèmes de l'aéronef.

L'unité de contrôle du moteur 24,25 est connectée, par exemple par des connexions filaires selon la norme ARINC429, au moteur 2-3, à l'unité pneumatique 20,21 et au système de démarrage 22,23. L'unité d'interface 26,27 est connectée, par exemple par des connexions filaires selon la norme ARINC429, à l'unité de contrôle du moteur 24,25, à la source de génération d'air comprimé 11, à l'interface homme-machine 14, ainsi qu'à l'unité d'interface 27,26 de l'autre système moteur.

Selon l'invention, le signal transmis par une unité d'interface 26,27 d'un système moteur 12,13 à l'unité d'interface 27,26 de l'autre système moteur 13,12 comprend un bit indicatif de l'activation d'une phase de palier (P2,P2') d'un cycle de démarrage automatique du moteur. Ainsi, le signal transmis par l'unité d'interface 26 du système moteur du premier moteur 12 comprend un bit MSLENG1 qui est mis à 1 lorsque la vitesse de rotation d'un rotor du premier moteur 2 est maintenue sensiblement constante et inférieure (par exemple, à sensiblement 10%) à la valeur nominale, et à 0 sinon. De manière symétrique, le signal transmis par l'unité d'interface 27 du système moteur du second moteur 13 comprend un bit MSLENG2 qui est mis à 1, lorsque la vitesse de rotation d'un rotor du second moteur 3 est maintenue sensiblement constante et inférieure (par exemple, à sensiblement 10%) à la valeur nominale, et à 0 sinon.

En outre, le signal transmis par une unité d'interface 26,27 à l'unité de contrôle 24,25 d'un même système moteur 12,13 comprend un bit indicatif de l'activation d'un cycle de démarrage court. Ainsi, dans un même système moteur 12,13, le signal transmis par l'unité d'interface 26,27 à l'unité de contrôle 24,25 comprend un bit MSOFF qui est mis à 1 lorsque cycle de démarrage qui doit être mis en oeuvre par l'unité de contrôle est le cycle de démarrage court, et à 0 sinon.

La source de génération d'air 11 génère un débit d'air comprimé envoyé par des tuyauteries 30 en entrée d'une turbine (non représentée) de chaque moteur 2,3 au travers de l'unité pneumatique 20,21 du système moteur 12,13 associé au moteur. La turbine produit en sortie un effort mécanique permettant de faire tourner au moins un rotor de l'étage haute pression du moteur 2,3. L'unité pneumatique 20,21 régule le débit d'air en entrée de la turbine afin de réguler la vitesse de rotation du rotor du moteur 2,3.

Un procédé de démarrage automatique des moteurs 2,3 d'un aéronef bimoteur 1 via le système de démarrage selon l'invention va maintenant être décrit.

Dans une première étape, les pilotes agissent sur l'interface homme-machine 14 installée dans le poste de pilotage 5 pour ordonner la mise en démarrage automatique d'un premier moteur 2. L'unité d'interface 26 du premier système moteur 12 reçoit un signal de l'interface homme-machine 14 selon lequel le premier moteur 2 est mis en procédure de démarrage automatique. En réponse l'unité d'interface 26 envoie un signal avec le bit MSOFF mis à 0 à l'unité de contrôle 24 du premier système moteur qui met en oeuvre le cycle de démarrage normal du premier moteur. A cette fin, ladite unité de contrôle 24 commande l'unité pneumatique 20 du premier système moteur 12 pour permettre à de l'air de la source de génération d'air 11 d'être envoyée à la turbine du moteur 2 et les phases de démarrage (P1) et de palier (P2) sont mises en oeuvre pour le premier moteur 2. Il est à noter que la phase de palier (P2) du cycle de démarrage normal mis en oeuvre a une durée calculée par l'unité de contrôle 24 du premier moteur 2.

Dans une deuxième étape, durant la mise en oeuvre de la phase de palier (P2) du cycle de démarrage du premier moteur 2, le bit MSLENG1 du signal transmis par l'unité d'interface 26 du premier système moteur 12 à l'unité d'interface 27 du second système moteur 13 est mis à 1.

Dans une troisième étape E3, en réponse au nouveau statut du signal MSLENG1 (bit mis à 1), l'unité d'interface 27 du second système moteur 13 transmet un signal à l'unité de contrôle 25 du second système moteur 13 qui met en oeuvre une phase de démarrage (P1') puis une phase de palier (P2'). A cette fin, l'unité de contrôle 25 commande l'unité pneumatique 21 du second système moteur 13 pour envoyer de l'air de la source de génération d'air 11 à la turbine du second moteur 3. Il est à noter que la phase palier (P2') mise oeuvre pour le second moteur 3 a une durée déterminée par l'unité de contrôle 25 du second système moteur 13 et peut ainsi avoir une durée différente de la phase palier (P2) mise en oeuvre pour le premier moteur 2. Durant la mise en oeuvre de la phase palier (P2') pour le second moteur 3, le bit MSLENG2 est mis à 1.

Lorsque l'unité de contrôle 24 du premier système moteur 12 détermine que la mise en oeuvre de la phase palier (P2) pour le premier moteur 2 est terminée, le bit MSLENG1 est mis à 0. De manière similaire, lorsque l'unité de contrôle 25 du second système moteur détermine que la mise en oeuvre de phase palier (P2') pour le second moteur 3 est terminée, le bit MSLENG2 est mis à 0.

Dans une étape E4, lorsque la phase palier (P2,P2') est terminée pour les deux moteurs (les deux bits MSLENG1 et MSLENG1 sont à 0), l'unité d'interface 27 du second système moteur 13 envoie un signal à l'unité de contrôle 25 qui commande alors l'unité pneumatique 21 pour stopper l'envoi d'air comprimé vers le second moteur 3. En conséquence, le rotor de l'étage haute pression du second moteur 3 ne sont plus entraînés. Le cycle de démarrage normal est par contre poursuivi pour le premier moteur 2.

Ainsi, dans une étape E5, la phase d'allumage (P3) du cycle de démarrage normal est mise en oeuvre pour le premier moteur 2. L'unité de contrôle 24 commande l'unité pneumatique 20 du premier système moteur 12 de sorte à augmenter la vitesse de rotation du rotor de l'étage haute pression du premier moteur 2 jusqu'à une valeur d'environ 30% (par exemple) puis commande l'unité d'allumage 22 du premier système moteur pour injecter du kérosène dans le moteur puis pour l'enflammer.

Dans une étape E6, la phase de montée en régime (P4) du cycle de démarrage normal est mise en oeuvre: une fois que le rotor du premier moteur 2 tournent sous l'action de la dilatation des gaz de combustion du mélange air-kérosène, l'unité de contrôle 24 du premier système moteur 12 commande l'unité pneumatique 20 pour que cette dernière stoppe l'envoi d'air comprimé au rotor du premier moteur 2. Le premier moteur 2 atteint par la suite la valeur de rotation nominale.

Dans une étape E7, une fois le premier moteur 2 démarré, les pilotes agissent sur l'interface homme-machine 14 pour ordonner la mise en démarrage automatique du second moteur 3. La mise en démarrage automatique peut être ordonnée dès la fin de la phase de montée en régime (P4) du premier moteur ou plusieurs minutes après la fin de cette phase.

L'unité d'interface 27 du second système moteur 13 reçoit un signal de l'interface homme-machine 14 selon lequel le second moteur 3 est mis en procédure de démarrage automatique. En réponse l'unité d'interface 27 envoie un signal avec le bit MSOFF mis à 1 à l'unité de contrôle 25 du second système moteur 13 pour que cette dernière lance un cycle de démarrage court du second moteur 3 si le temps entre la fin du cycle de démarrage normal du premier moteur et la réception, par l'unité d'interface 27, du signal de l'interface homme-machine 14 selon lequel le second moteur 3 est mis en procédure de démarrage automatique est inférieur à une durée prédéterminé, par exemple de 1 heure à 1 heure trente. Si le temps est supérieur à la durée prédéterminée, la second moteur est démarré selon un cycle de démarrage normal (l'unité d'interface 27 envoie un signal avec le bit MSOFF mis à 0 à l'unité de contrôle 25 du second système moteur 13).

En réponse à ce signal, ladite unité de contrôle 25 commande l'unité pneumatique 21 du second système moteur 13 pour permettre à de l'air de la source de génération d'air 11 d'être envoyé à la turbine du second moteur 3 pour mettre en oeuvre la phase de démarrage (P1') du cycle de démarrage court.

Ensuite, dans une étape E8, l'unité de contrôle 25 met oeuvre la phase d'allumage (P3') du cycle de démarrage court. A cet effet, l'unité de contrôle 25 commande l'unité pneumatique 21 du second système moteur 13 de sorte à augmenter la vitesse de rotation du rotor du second moteur 3 jusqu'à une valeur d'environ 30% (par exemple) puis commande l'unité d'allumage 23 du second système moteur 13 pour injecter du kérosène dans le moteur 3 puis pour l'enflammer.

Dans une étape E9, l'unité de contrôle 25 met oeuvre la phase de montée en régime (P4') du cycle de démarrage court une fois que le rotor du second moteur 3 tournent sous l'action de la dilatation des gaz de combustion du mélange air-kérosène. A cet effet l'unité de de contrôle 25 du second système moteur 13 commande l'unité pneumatique 21 pour que cette dernière stoppe l'envoi d'air comprimé au second moteur 3. Le second moteur 3 atteint par la suite la valeur de rotation nominale.

A la suite de ces étapes, les deux moteurs 2,3 de l'aéronef 1 sont en route et l'aéronef est prêt pour le décollage.

L'invention, en implémentant un cycle de démarrage court pour le moteur démarré en second, permet de réduire le temps d'immobilisation de l'avion au sol entre deux vols jusqu'à cinq minutes. La mise en oeuvre d'une phase palier préventivement au cycle de démarrage court du second moteur rend le processus fiable et sûr puisque malgré un démarrage plus court, les phénomènes de déformation de type « bowed rotor » sont évités.

En alternative du mode de réalisation décrit ci-dessus, la source de génération d'air comprimé 11 est un compresseur externe à l'aéronef. En outre, bien que non décrit, chaque unité d'interface 26,27 d'un système moteur 12,13 est en communication avec la source de génération d'air comprimé 11 et un calculateur permet d'adapter le mode du fonctionnement de la source d'air comprimé 11 en fonction de la charge pneumatique de cette dernière afin de pouvoir, en particulier, alimenter simultanément les deux moteurs 2,3 en air comprimé.

Enfin, dans un mode de réalisation qui ne fait pas partie de l'invention, les unités d'interface (26,27) des systèmes moteurs ne sont pas connectées entre elles mais ce sont les unités de contrôles (24,25) des deux systèmes moteurs qui sont connectées entres elles et qui assurent la communication entre lesdits deux systèmes. Dans ce cas, le signal transmis par une unité de contrôle d'un système moteur à l'unité de contrôle de l'autre système moteur comprend un bit indicatif de l'activation d'une phase de palier (P2,P2') d'un cycle de démarrage automatique du moteur.

## Revendications

1. Procédé de démarrage automatique d'un aéronef bimoteur (1), l'aéronef comprenant un premier et un second moteur (2,3) ayant chacun un étage haute pression comprenant au moins un rotor, le procédé de démarrage comprenant le démarrage automatique d'un premier puis d'un second moteur, le démarrage du premier moteur (2) consistant en la mise en oeuvre d'un cycle de démarrage s'effectuant en quatre phases successives dont :
• une phase (P1) de démarrage où au moins un rotor de l'étage haute pression du premier moteur (2) est mis en rotation via une source de génération d'air comprimé (11) ;
• une phase (P2) de palier où la vitesse de rotation du au moins un rotor du premier moteur (2) est maintenue à une vitesse sensiblement constante et inférieure à une valeur nominale pendant une durée prédéterminée;
• une phase (P3) d'allumage où une combustion d'un mélange air-kérosène est initiée dans le premier moteur (2) ; et
• une phase (P4) de montée en régime où la vitesse de rotation du au moins un rotor du premier moteur (2) est augmentée jusqu'à atteindre la valeur nominale,
le procédé étant **caractérisée en ce que** concomitamment au cycle de démarrage du premier moteur (2), au moins un rotor de l'étage haute pression du second moteur (3) est mis en rotation pendant une durée prédéterminée, via la source de génération d'air comprimé (11), à une vitesse sensiblement constante et inférieure à la valeur nominale, et **en ce que** une fois la phase de montée en régime (P4) du cycle de démarrage du premier moteur (2) terminée, le second moteur (3) est démarré, le démarrage du second moteur consistant en la mise en oeuvre d'un cycle de démarrage s'effectuant en trois phases successives dont :
• une phase (P1') de démarrage où au moins un rotor de l'étage haute pression du second moteur (3) est mis en rotation via une source de génération d'air comprimé (11) ;
• une phase (P3') d'allumage où une combustion d'un mélange air-kérosène est initiée dans le second moteur (3) ; et
• une phase (P4') de montée en régime, où la vitesse de rotation du au moins un rotor du second moteur (2) est augmentée jusqu'à atteindre la valeur nominale.

2. Procédé de démarrage automatique d'un aéronef bimoteur (1) selon la revendication 1, **caractérisé en ce que** la phase d'allumage (P3) du cycle de démarrage du premier moteur (2) est mise en oeuvre lorsque la durée durant laquelle le au moins un rotor de l'étage haute pression du second moteur (3) est mis en rotation à une vitesse sensiblement constante et inférieure à la valeur nominale est écoulée.

3. Système de démarrage des moteurs (2,3) d'un aéronef bimoteur (1) pour la mise en oeuvre du procédé de démarrage automatique d'un aéronef bimoteur selon la revendication 1, l'aéronef ayant un premier et un second moteur (2,3) ayant chacun un étage haute pression comprenant au moins un rotor, et une source de génération d'air comprimé (11) pour mettre en rotation le au moins un rotor de chacun desdits systèmes moteur, le système de démarrage comprenant en outre un premier et un second systèmes moteurs (12,13) connectés entre eux et respectivement associé au premier et au second moteur (2,3), chaque système moteur (12,13) comprenant une unité de contrôle du moteur (24,25) connectée au moteur et configurée pour contrôler ledit moteur, et une unité d'interface (26,27) connectée à ladite unité de contrôle et connectée à ladite source, **caractérisé en ce qu'**un signal transmis par le premier système moteur (12) au second système moteur (13) comprend un bit indicatif (MSLENG1) de l'activation d'une phase de palier (P2) durant laquelle la vitesse de rotation du au moins un rotor du premier moteur (2) est maintenue à une vitesse sensiblement constante et inférieure à une valeur nominale pendant une durée prédéterminée et **en ce qu'**un signal transmis par le second système moteur (13) au premier système moteur (13) comprend un bit (MSLENG2) indicatif de l'activation d'une phase de palier (P2') durant laquelle la vitesse de rotation du au moins un rotor du second moteur (2) est maintenue à une vitesse sensiblement constante et inférieure à la valeur nominale pendant une durée prédéterminée.

4. Système de démarrage selon la revendication 3 , **caractérisé en ce qu'**un signal transmis par une unité d'interface (26,27) d'un système moteur (12,13) associé à un moteur (2,3) à l'unité de contrôle (27,26) dudit système moteur (13,12) comprend un bit (MSOFF) indicatif de l'activation d'un cycle de démarrage s'effectuant en trois phases successives dont :
• une phase (P1') de démarrage, où au moins un rotor de l'étage haute pression du moteur est mis en rotation via une source de génération d'air comprimé (11) ;
• une phase (P3'), dite d'allumage, où une combustion d'un mélange air-kérosène est initiée dans le moteur ; et
• une phase (P4'), dite de montée en régime, où la vitesse de rotation du au moins un rotor du moteur (2) est augmentée jusqu'à atteindre la valeur nominale.

5. Système de démarrage selon la revendication 3, **caractérisé en ce que** l'unité d'interface (26) du premier système moteur est connectée à l'unité d'interface (27) du second système moteur.

## Patentansprüche

1. Verfahren zum automatischen Starten eines zweimotorigen Luftfahrzeugs (1), wobei das Luftfahrzeug einen ersten und einen zweiten Motor (2, 3) umfasst, die jeweils eine Hochdruckstufe aufweisen, die mindestens einen Rotor umfasst, wobei das Verfahren zum Starten das automatische Starten eines ersten, dann eines zweiten Motors umfasst, wobei das Starten des ersten Motors (2) aus der Umsetzung eines Startzyklus besteht, der in vier aufeinanderfolgenden Phasen erfolgt, darunter:
• eine Startphase (P1), bei der mindestens ein Rotor der Hochdruckstufe des ersten Motors (2) über eine Quelle zur Erzeugung von Druckluft (11) in Rotation versetzt wird;
• eine Zwischenphase (P2), bei der die Drehzahl des mindestens einen Rotors des ersten Motors (2) für eine vorbestimmte Zeitdauer bei einer Geschwindigkeit gehalten wird, die im Wesentlichen konstant ist und unter einem Nennwert liegt;
• eine Zündungsphase (P3), bei der eine Verbrennung eines Luft-Kerosin-Gemischs in dem ersten Motor (2) eingeleitet wird; und
• eine Hochfahrphase (P4), bei der die Drehzahl des mindestens einen Rotors des ersten Motors (2) erhöht wird, bis der Nennwert erreicht ist,
wobei das Verfahren **dadurch gekennzeichnet ist, dass** zeitgleich zum Startzyklus des ersten Motors (2) mindestens ein Rotor der Hochdruckstufe des zweiten Motors (3) über die Quelle zur Erzeugung von Druckluft (11) für eine vorbestimmte Zeitdauer bei einer Geschwindigkeit, die im Wesentlichen konstant ist und unter dem Nennwert liegt, in Rotation versetzt wird, und dadurch, dass, sobald die Hochfahrphase (P4) des Startzyklus des ersten Motors (2) beendet ist, der zweite Motor (3) gestartet wird, wobei das Starten des zweiten Motors aus der Umsetzung eines Startzyklus besteht, der in drei aufeinanderfolgenden Phasen erfolgt, darunter:
• eine Startphase (P1'), bei der mindestens ein Rotor der Hochdruckstufe des zweiten Motors (3) über eine Quelle zur Erzeugung von Druckluft (11) in Rotation versetzt wird;
• eine Zündungsphase (P3'), bei der eine Verbrennung eines Luft-Kerosin-Gemischs in dem zweiten Motor (3) eingeleitet wird; und
• eine Hochfahrphase (P4'), bei der die Drehzahl des mindestens einen Rotors des zweiten Motors (2) erhöht wird, bis der Nennwert erreicht ist.

2. Verfahren zum automatischen Starten eines zweimotorigen Luftfahrzeugs (1) nach Anspruch 1, **dadurch gekennzeichnet, dass** die Zündungsphase (P3) des Startzyklus des ersten Motors (2) umgesetzt wird, wenn die Zeitdauer, während welcher der mindestens eine Rotor der Hochdruckstufe des zweiten Motors (3) für eine vorbestimmte Dauer bei einer Geschwindigkeit, die im Wesentlichen konstant ist und unter dem Nennwert liegt, in Rotation versetzt wird, verstrichen ist.

3. System zum Starten der Motoren (2, 3) eines zweimotorigen Luftfahrzeugs (1) für die Umsetzung des Verfahrens zum automatischen Starten eines zweimotorigen Luftfahrzeugs nach Anspruch 1, wobei das Luftfahrzeug einen ersten und einen zweiten Motor (2, 3), die jeweils eine Hochdruckstufe aufweisen, die mindestens einen Rotor umfasst, und eine Quelle zur Erzeugung von Druckluft (11), um den mindestens einen Rotor jedes der Motorsysteme in Rotation zu versetzen, aufweist, wobei das System zum Starten ferner ein erstes und ein zweites Motorsystem (12, 13) umfasst, die miteinander verbunden und jeweils mit dem ersten und dem zweiten Motor (2, 3) verknüpft sind, wobei jedes Motorsystem (12, 13) eine Steuereinheit des Motors (24, 25), die mit dem Motor verbunden ist und ausgelegt ist, den Motor zu steuern, und eine Schnittstelleneinheit (26, 27), die mit der Steuereinheit verbunden ist und mit der Quelle verbunden ist, umfasst, **dadurch gekennzeichnet, dass** ein Signal, das von dem ersten Motorsystem (12) an das zweite Motorsystem (13) übertragen wird, ein Bit (MSLENG1) umfasst, das die Aktivierung einer Zwischenphase (P2) anzeigt, während welcher die Drehzahl des mindestens einen Rotors des ersten Motors (2) für eine vorbestimmte Zeitdauer bei einer Geschwindigkeit gehalten wird, die im Wesentlichen konstant ist und unter einem Nennwert liegt, und dadurch, dass ein Signal, das von dem zweiten Motorsystem (13) an das erste Motorsystem (13) übertragen wird, ein Bit (MSLENG2) umfasst, das die Aktivierung einer Zwischenphase (P2') anzeigt, während welcher die Drehzahl des mindestens einen Rotors des zweiten Motors (2) für eine vorbestimmte Zeitdauer bei einer Geschwindigkeit gehalten wird, die im Wesentlichen konstant ist und unter dem Nennwert liegt.

4. System zum Starten nach Anspruch 3, **dadurch gekennzeichnet, dass** ein Signal, das von der Schnittstelleneinheit (26, 27) eines Motorsystems (12, 13), das mit einem Motor (2, 3) verknüpft ist, an die Steuereinheit (27, 26) des Motorsystems (13, 12) übertragen wird, ein Bit (MSOFF) umfasst, das die Aktivierung eines Startzyklus anzeigt, der in drei aufeinanderfolgenden Phasen erfolgt, darunter:
• eine Startphase (P1'), bei der mindestens ein Rotor der Hochdruckstufe des Motors über eine Quelle zur Erzeugung von Druckluft (11) in Rotation versetzt wird;
• eine Phase (P3') des Zündens, bei der eine Verbrennung eines Luft-Kerosin-Gemischs in dem Motor eingeleitet wird; und
• eine Phase (P4') des Hochfahrens, bei der die Drehzahl des mindestens einen Rotors des Motors (2) erhöht wird, bis der Nennwert erreicht ist.

5. System zum Starten nach Anspruch 3, **dadurch gekennzeichnet, dass** die Schnittstelleneinheit (26) des ersten Motorsystems mit der Schnittstelleneinheit (27) des zweiten Motorsystems verbunden ist.

## Claims

1. Method for the automatic starting of a twin-engine aircraft (1), the aircraft comprising a first and a second engine (2, 3) each having a high-pressure stage comprising at least one rotor, the starting method comprising the automatic starting of a first and then of a second engine, the starting of the first engine (2) consisting in implementing a starting cycle that takes place in four successive phases, these being:
• a starting phase (P1) in which at least one rotor of the high-pressure stage of the first engine (2) is spun up via a compressed-air-generating source (11);
• a holding phase (P2) in which the rotational speed of the at least one rotor of the first engine (2) is held at a speed that is substantially constant and less than a nominal value for a predetermined duration;
• an ignition phase (P3) in which combustion of an air-fuel mixture is initiated in the first engine (2); and
• a run-up phase (P4) in which the rotational speed of the at least one rotor of the first engine (2) is increased until it reaches the nominal value,
the method being one **characterized in that**, concomitantly with the starting cycle for the first engine (2), at least one rotor of the high-pressure stage of the second engine (3) is spun up for a predetermined duration, using the compressed-air-generating source (11), to a speed that is substantially constant and less than the nominal value, and **characterized in that** once the run-up phase (P4) of the starting cycle for the first engine (2) is complete, the second engine (3) is started, the starting of the second engine consisting in implementing a starting cycle that takes place in three successive phases, these being:
• a starting phase (P1') in which at least one rotor of the high-pressure stage of the second engine (3) is spun up via a compressed-air-generating source (11);
• an ignition phase (P3') in which combustion of an air-fuel mixture is initiated in the second engine (3); and
• a run-up phase (P4') in which the rotational speed of the at least one rotor of the second engine (2) is increased until it reaches the nominal value.

2. Method for the automatic starting of a twin-engine aircraft (1) according to Claim 1, **characterized in that** the ignition phase (P3) of the starting cycle for the first engine (2) is implemented following expiry of the duration during which the at least one rotor of the high-pressure stage of the second engine (3) is spun up to a speed that is substantially constant and less than the nominal value.

3. System for starting the engines (2, 3) of a twin-engine aircraft (1) for implementing the method for the automatic starting of a twin-engine aircraft according to claim 1, the aircraft having a first and a second engine (2, 3) each having a high-pressure stage comprising at least one rotor, and a compressed-air-generating source (11) for spinning up the at least one rotor of each of said engine systems, the starting system further comprising a first and a second engine system (12, 13) connected to one another and respectively associated with the first and with the second engine (2, 3), each engine system (12, 13) comprising an engine control unit (24, 25) connected to the engine and configured to control said engine, and an interface unit (26, 27) connected to said control unit and connected to said source,
**characterized in that** a signal transmitted by the first engine system (12) to the second engine system (13) comprises a bit (MSLENG1) indicative of activation of a holding phase (P2) during which the rotational speed of the at least one rotor of the first engine (2) is held at a speed that is substantially constant and less than a nominal value for a predetermined duration, and **in that** a signal transmitted by the second engine system (13) to the first engine system (13) comprises a bit (MSLENG2) indicative of activation of a holding phase (P2') during which the rotational speed of the at least one rotor of the second engine (2) is held at a speed that is substantially constant and less than the nominal value for a predetermined duration.

4. Starting system according to Claim 3, **characterized in that** a signal transmitted by an interface unit (26, 27) of an engine system (12, 13) associated with an engine (2, 3) to the control unit (27, 26) of said engine system (13, 12) comprises a bit (MSOFF) indicative of the activation of a starting cycle that takes place in three successive phases, these being:
• a starting phase (P1') in which at least one rotor of the high-pressure stage of the engine is spun up via a compressed-air-generating source (11);
• a phase (P3'), referred to as the ignition phase, in which combustion of an air-fuel mixture is initiated in the engine; and
• a phase (P4'), referred to as the run-up phase, in which the rotational speed of the at least one rotor of the engine (2) is increased until it reaches the nominal value.

5. Starting system according to Claim 3, **characterized in that** the interface unit (26) of the first engine system is connected to the interface unit (27) of the second engine system.
